# EUROPEAN PATENT SPECIFICATION

(11) **EP 0 518 828 B1**
(45) Date of publication and mention of the grant of the patent: **02.08.1995**
(21) Application number: 92830242.1
(22) Date of filing: 20.05.1992
(51) Int. Cl.: B65B 55/02, B65B 55/18, B65B 31/02, A23L 3/04

(54) **A process and plant for the canning of food products**
Verfahren und Vorrichtung zum Verpacken von Nahrungsmitteln in Dosen
Méthode et installation pour la mise en boîte de produits alimentaires

(30) Priority: 10.06.1991 IT PR910025; 27.06.1991 IT PR910027
(43) Date of publication of application: 16.12.1992
(73) Proprietor: Manzini Comaco S.p.A., I-43100 Parma (IT)
(72) Inventor: Dall'Argine, Franco, I-43100 Parma (IT)
(74) Representative: Lanzoni, Luciano

(56) References cited:
- FR-A- 2 407 135
- GB-A- 551 271
- US-A- 3 613 746
- US-A- 3 687 261

## Description

The invention relates to a process and a plant for the canning of food products.

In particular, the invention relates to the canning of food products containing relevant quantities of liquid, such as green beans, peas, fruit in chunks or vegetables in cans or rigid metallic containers, or in plastic materials or in hermetically sealed glass jars.

The prior art teaches differing processes and plants for the canning of food products in hermetically sealed rigid recipients such as, for example, those illustrated in US. patents no. 2040726 and 2268563.

In those documents it is shown how it is preferable to bring the recipients containing the food product into a vacuum chamber or a steam and water chamber before introducing it into a sterilising chamber in which a water-steam atmosphere is maintained so as preliminarily to eliminate most of the air contained in the recipient and product.

In other terms, a good sterilisation of the recipient-food product pair cannot be effected without providing a vacuum- or steam-water-atmosphere chamber upstream of the true sterilisation chamber.

Another known process is that described in EP patent no. 164277, in which the air present in the can is substituted with a liquid, subsequently eliminating the said liquid in a condensable gas atmosphere so that the said gas enters the recipient and, on condensing, creates the required vacuum.

It has been noted that with the process envisaged in the above-mentioned EP patent no. 164277, the product undergoes part of its cooking and sterilisation while immersed in a liquid, which can damage some types of vegetable product, such as for example peas.

In US patent no. 2268563 pre-heating and sterilisation of the product take place in the same chamber, for which reason total elimination of the air present in the can, a fundamental condition for perfect conservation of the said product, is not possible.

In US patent no. 2040726 the steam is introduced directly and at a high temperature, in contact with the food product and therefore damaging it without guaranteeing total elimination of the air. Aim of the present invention is to eliminate from the can not only the air present in it but also any uncondensable gases which develop during the heating of the product.

A further aim is that of not modifying the product either from the point of view of its consistency or from the point of view of its coloration. These and other aims besides are fully attained by the process, object of the present invention, for the canning of food products in rigid containers such as metallic cans, plastic and glass containers, a process which envisages the sterilisation by heat of the container containing the product, characterised by the contents of the appended claims.

The plant which is also the object of the present invention envisages a connection by means of a star conveyor to a high-temperature seam folding machine or a capper, and is characterised by the contents of the appended claims.

These and other characteristics will better emerge from the following description of three preferred embodiments of the plant, illustrated purely in the form of non-limiting examples in the accompanying drawings, in which:
- Figure 1 shows a first embodiment of the plant;
- Figure 2 shows the plant according to a second embodiment;
- Figure 3 shows a third embodiment of the invention.

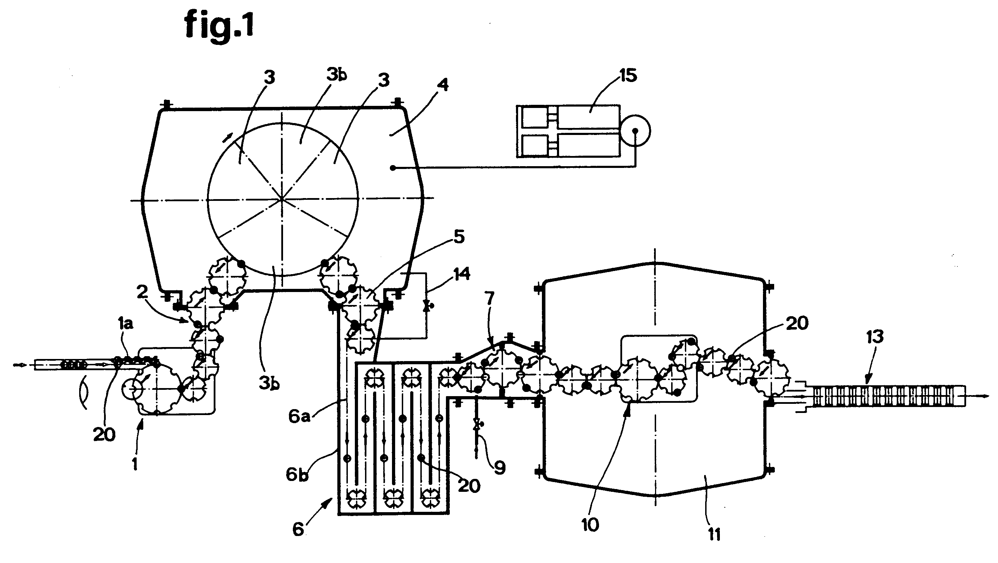

With reference to figure 1, the plant envisages a pre-seam folder or pre-capper denoted by 1, fed by an Archimedes screw 1a with containers 20 already filled with food product, constituted preferably by fruit in chunks or vegetables in general. The food product may also be constituted by animal or fish preserves.

The containers 20 can be rigid metallic or plastic cans, for which a pre-seam folder is employed, or glass jars for which a pre-capper is used.

The pre-seam folder is of the type which performs a discontinuous folding of the cover of the can to allow the passage of air or steam from the inside to the outside of the can and vice-versa.

The cover applied to the containers 20 can be the final cover which will then close the can hermetically, or it can be a provisional cover being part of the plant and destined to accompany the containers 20 up to the moment when the said provisional cover will be substituted by the final, definitive cover.

The said aim is attained by the pre-capper 1, which performs a non-hermetic application of the cover to the glass jar.

2 denotes a conveyor group of the containers from the pre-seam folder or the pre-capper 1 to a high-vacuum chamber 4, in which there are two instantaneous water and steam injection stations 3, separated by a vacuum zone 3B so as to create alternatively in the containers two instantaneous steam injections and two extractions by means of vacuum. To create the vacuum in the chamber 4 a vacuum pump 15 is provided.

5 denotes a star conveyor group for exit from the high-vacuum chamber 4 and for the placing of the containers 20 in a pre-heating-sterilising group 6, which is substantially constituted by a conveyor 6a of the containers closed in a container 6b which forms an external-pressure environment into which steam is introduced and which moves in a contrary flow to that of the container advancement.

The flow of the steam in a contrary direction to the containers 20 advancement direction is caused by the inevitable losses of the star group 5 at the exit or the high-vacuum chamber 4, by a controlled connecting passage 14 of the high-vacuum chamber 4 with the pre-heating-sterilising group 6 and by the controlled condensation of the steam before the said star group 5.

The controlled connecting passage 14 has also the function of maintaining an internal temperature in the pre-heating-sterilising group 6 of about between 90° and 100°C.

Operatively, it would be possible to subdivide the pre-heater into two zones, with the aim of bringing the container to differentiated temperatures: a first zone would have preferably a temperature comprised between about 70°C and 80°C, whereas a second zone would have a temperature comprised preferably between about 90° and 100°C, the first zone being used substantially for pre-heating and the second zone substantially for sterilisation.

7 denotes a star conveyor for transferring the containers 20 from pre-heating-sterilising group 6 to a seam-folder or capper 10 of the high-temperature type, housed in a steam-filled chamber 11 and possibly at a higher-than-atmospheric pressure.

A conduit 9 is present at the star conveyor 7 by means of which it is possible to introduce sterile covering liquid into the containers 20.

The capper, substantially of known type, is used particularly for rigid metallic containers, while the capper, also of known type, is used in the case of glass jars or other containers.

The seam folder or capper 10 is followed by a can-extractor star conveyor which feeds a line conveyor 13 for a first cooling of the containers 20.

The process carried out by the above-described plant envisages thus a first pre-folding or pre-capping phase for the containers 20 by means of the non-hermetic application of the cover (provisional or definitive) to the container to create openings in which steam or air contained in the container 20 can be easily injected or extracted.

The pre-folding or pre-capping happens at atmospheric pressure.

Successively the container 20 is introduced into the high-vacuum chamber 4 in which the instantaneous steam injection into the container happens, during a momentaneous separation from the vacuum environment, alternated with extraction phases under vacuum so as to extract from the container all of the air present in it.

In the example illustrated, the process envisages two instantaneous injection of steam alternated with two extractions under vacuum conditions.

During the said steam injection and extraction phases the product is brought to a temperature comprised between 30°C and 40°C.

Before proceeding with the final sterilisation of the container and of the product contained in it, preferably a heating phase is performed, to hring the product to a temperature comprised between 70°C and 80°C.

The pre-heating happens by means of steam which is injected into the pre-heater-steriliser 6 in such a way that the said steam flows into the pre-heater according to a contrary flow with respect to the advancement direction of the containers 20.

The contrary advancement flow of the steam with respect to that of the container 20 is created, in an external pressure environment, because of the inevitable losses which occur in the star group 5 existing from the high-vacuum chamber or during the controlled connecting passage 14 envisaged between the said high-vacuum chamber and the pre-heater-steriliser.

Further, the contrary flow of the steam is favoured by the condensation of the steam before the star group 5.

The said controlled connecting passage 14 has furthermore the task of regulating the pre-heating and sterilising temperature. The steam and the uncondensable gases which develop from the heating of the product by the pre-heating group will pass to the vacuum chamber in which their condensation will take place. The canned product will therefore undergo the sterilisation phase without air or uncondensable gases, an indispensable condition for the final conservation of the product.

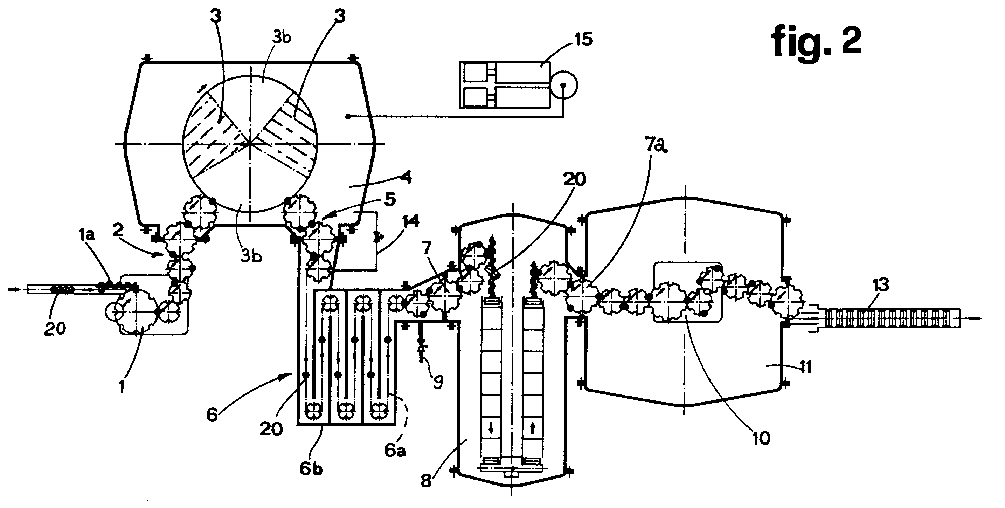

According to a different embodiment, illustrated in figure 2, particularly suitable for watery vegetable food products such as peas, beans or similar, for which a high sterilisation temperature is required (about 130° - 140°C), the use of a steriliser 8 is envisaged, located between the pre-heating-sterilising group 6 and the chamber 11 where the seam folder or capper is housed.

The steriliser 8 has the function of bringing the product to a high temperature, above 130°C, to effect the cooking or sterilisation of the product.

When the product is constituted by fruit, the temperature of about 90-100°C reached in the pre-heating-sterilising group 6 is sufficient to sterilise the product, and it is for this reason that the pre-heating-sterilising group 6 is a preheater-steriliser.

The steriliser 8 receives the container 20 by means of the star conveyor 7 and comprises a further star conveyor 7a for the exit of the said containers 20, sending them by means of this last to the seam folder or capper 10.

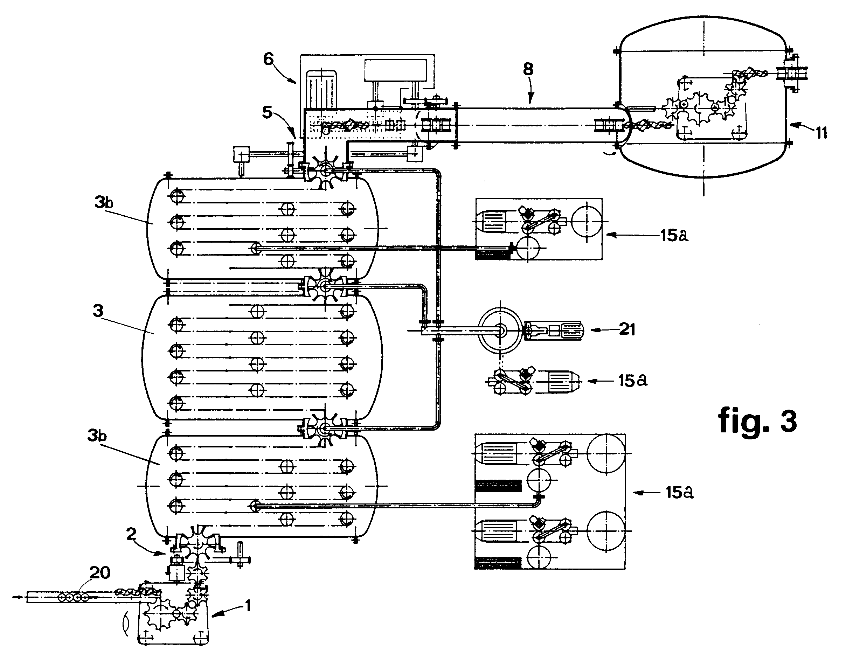

With reference to figure 3, in which a further embodiment of the invention is illustrated, the high-vacuum chamber 4 has been substituted by two vacuum chambers or stations 3b and by one intermediate steam- and water-injection chamber or station 3, connected to vacuum pumps 15a and to a steam-condenser 21.

Thus, the containers 20 undergo a first vacuum phase in the first chamber or station 3b, an almost instantaneous injection of steam and water in the intermediate chamber or station 3, and finally a further vacuum phase in the final chamber or station 3b placed before the exit star group 5.

Internally to the single chambers or stations 3 and 3b, the containers 20 follow an itinerary which in the figure is represented by a broken line and which is completed with the help of suitable conveyors of known type.

## Claims

1. A process for the canning of food products in rigid metallic containers (20), or plastic containers or glass containers, which process envisages the sterilisation by heat application of the containers (20) containing the product, characterised in that it comprises, before the sterilisation and closing phase of the containers (20), the following phases:
- pre-closing of the containers (20) in which the food is contained, by means of the non-hermetic application of a cover, at atmospheric temperature and pressure;
- the introduction of the said containers (20) into at least one high-vacuum chamber (4, 3b) at atmospheric temperature, in which chamber (4) one or more almost instantaneous injections of steam are made into the containers (20) during moments of separation from the vacuum atmosphere which are alternated with passage through the vacuum;
- pre-heating of the product to a controlled temperature in an atmospheric pressure closed chamber by means of steam which moves in a direction counter to the advancement flow direction of the containers (20), towards the vacuum chamber (4).

2. A process as in claim 1, characterised in that it comprises, between the pre-closing of the containers and the pre- heating of the product, the intermediate following phase :
- introduction of the said containers (20) into a first high-vacuum chamber (3b) at atmospheric temperature, successive passing through an intermediate chamber (3) in which one or more practically instantaneous injections of steam are made into the containers (20) which are momentaneously separated from the vacuum environment, and passage to a further high-vacuum chamber (3b).

3. A process as in claims 1 or 2, characterised by the fact that the phase of pre-closing of the container (20) occurs with the utilisation of a provisional cover, which cover is part of the plant itself.

4. A process as in claim 1, characterised by the fact that the container (20) in the vacuum chamber (4) undergoes two or more instantaneous injections of steam alternated with two corresponding passages through vacuum conditions.

5. A process for canning as in claims 1 or 2, characterised by the fact that in the high-vacuum chamber (4, 3b) the product reaches a temperature comprised between 30°C and 35°C.

6. A process as in claims 1 or 2, characterised by the fact that in the pre-heating phase the product is brought to a temperature comprised between about 70°C and 80°C, before undergoing sterilisation at a temperature comprised between about 90°C and 98°C.

7. A process as in claims 1 and 2, characterised by the fact that in the pre-heating phase the product is brought to a temperature comprised between about 70°C and 80°C, before undergoing sterilisation at a temperature comprised between about 130°C and 140°C.

8. A plant for the canning of watery food products such as fruit in chunks and vegetables, in rigid metallic containers (20), or plastic containers or glass containers, which plant is equipped with a temperature sterilizing group connected by a star conveyor (7) to a high-temperature seam folder or capper (10) and characterised in that it comprises, in combination:
- a pre-seam-folding machine or pre-capper (1) which will apply a non-hermetic cover on the containers (20) already containing the product, to allow the passage of fluid from the containers (20) to the outside and vice-versa;
- at least one high-vacuum chamber (4, 3b) comprising one or more steam injection stations (3) for the container alternated with one or more vacuum stations for the extraction of the steam from the container;
- a container transfer group (2) to transfer the containers (20) from the pre-seam folder or the pre-capper (1) to the vacuum chamber (4, 3b);
- a pre-heater-steriliser (6) for the containers (20) constituted by a conveyor (6a) in an atmospheric pressure closed chamber into which steam is introduced which steam moves it, an opposite direction to the advancement direction of the containers (20);

9. A plant as in claim 8, characterised in that it comprises :
- a first high-vacuum chamber (3b) connected to an intermediate chamber or station (3) for the injection of steam into the containers (20) which containers are in their turn connected to a further high-vacuum chamber or station (3b).

10. A plant as in claim 8 or 9, characterised in that it comprises a controlled connecting passage (14) of the uncondensable gases and the air from the closed environment of the said pre-heating-sterilising group (6) to the high-vacuum chamber (4, 3b).

11. A plant as in claims 8 or 9, characterised by the fact that the cover applied by the said pre-seam folder or pre-capper (1) is a provisional cover being part of the plant and destined to accompany the relative container (20) up until its hermetic closure with a definitive cover.

12. A plant as in claims 8 or 9, characterised by the fact that it comprises a conduit (9) positioned at a star conveyor group (7) located between the said pre-heating-sterilising group (6) and the steam folder or capper (10), which conduit (9) will introduce sterile covering liquid into the not-yet hermetically closed containers (20).

13. A canning plant as in claim 8, characterised by the fact that the said high-vacuum chamber (4) comprises two or more steam-injection stations (3) for the said cans alternated with two or more vacuum steam-extractor stations (3b).

14. A plant as in claim 9, characterised by the fact that it comprises vacuum pumps (15a) and at least one steam condenser (21), connected to the vacuum chambers or stations (3b) and to the intermediate chamber or station (3).

## Patentansprüche

1. Ein Verfahren zum Verpacken von Lebensmitteln in starre Metallbehälter (20), Kunststoffbehälter oder Glasbehälter, wobei dieses Verfahren eine Hitzesterilisierung des das Lebensmittel enthaltenden Behälters (20) vorsieht und durch die Tatsache gekennzeichnet ist, daß es vor der Sterilisierungs- und Verschlußphase des Behälters (20) die folgenden Phasen umfaßt:
- Vor-Verschluß des das Lebensmittel enthaltenden Behälters (20) durch einen nicht hermetischen Verschluß bei Umgebungstemperatur und Umgebungsdruck;
- Einführung des genannten Behälters (20) in zumindest eine Vakuumkammer (4, 3b) bei Umgebungstemperatur, in der während der Trennung von der Vakuumatmosphäre eine oder mehrere Einstrahlungen von Dampf in den Behälter (20) erfolgen, die mit dem Durchlauf durch die Vakuumkammer abwechseln;
- Vorheizen des Produkts auf eine kontrollierte Temperatur in einer geschlossenen Kammer unter Umgebungsdruck durch Dampf, der sich entgegen der Vortriebrichtung der Behälter (20) in die Vakuumkammer (4) bewegt.

2. Ein Verfahren gemäß Anspruch 1, welches zwischen dem Vor-Verschluß des Behälters und dem Vorheizen des Produkts umfaßt:
- Einführung der genannten Behälter in eine Vakuumkammer (3b) mit starkem Unterdruck bei Umgebungstemperatur, anschließend Durchlauf durch eine Zwischenkammer (3), in der eine oder mehrere Dampfeinstrahlungen in die Behälter (20) erfolgen, die momentan von der Vakuumumgebung getrennt werden, und Durchlauf durch eine weitere Vakuumkammer (3b) mit starkem Unterdruck;

3. Ein Verfahren gemäß Anspruch 1 oder 2, gekennzeichnet durch die Tatsache, daß die Phase des Vor-Verschlusses des Behälters (20) aus der Verwendung eines provisorischen Verschlusses besteht, der ein Teil der Anlage selbst ist.

4. Ein Verfahren gemäß Anspruch 1, gekennzeichnet durch die Tatsache, daß der Behälter (20) in der Vakuumkammer (4) einer oder mehreren Dampfeinstrahlungen unterzogen wird, die mit zwei entsprechenden Durchläufen durch eine Vakuumkammer abwechseln.

5. Ein Verfahren zum Verpacken gemäß Anspruch 1 oder 2, gekennzeichnet durch die Tatsache, daß das Produkt in der Vakuumkammer mit dem starken Unterdruck (4, 3b) eine Temperatur erreicht, die zwischen 30°C und 35°C liegt.

6. Ein Verfahren gemäß den Ansprüchen 1 oder 2, gekennzeichnet durch die Tatsache, daß das Produkt in der Vorheizphase auf eine Temperatur gebracht wird, die zwischen 70°C und 80°C liegt, bevor es der Sterilisierung unterzogen wird, die bei einer Temperatur erfolgt, die zwischen 90°C und 98°C liegt.

7. Ein Verfahren gemäß den Ansprüchen 1 oder 2, gekennzeichnet durch die Tatsache, daß das Produkt in der Vorheizphase auf eine Temperatur gebracht wird, die zwischen 70°c und 80°C liegt, bevor es der Sterilisierung unterzogen wird, die bei einer Temperatur erfolgt, die zwischen 130°C und 140°C liegt.

8. Eine Vorrichtung zum Verpacken von wässrigen Lebensmittels wie Obst in Stücken oder Gemüse in starre Metallbehälter (20), Kunststoffbehälter oder Glasbehälter,
wobei diese Vorrichtung durch einen Sternförderer (7) mit einem Aggregat zur Hitzesterilisierung mit einer Hochtemperatur-Falzmaschine oder einer Verkronungsvorrichtung (10) verbunden ist und durch die Tatsache gekennzeichnet ist daß sie in Kombination umfaßt:
- eine Vor-Falzmaschine oder eine Verkronungsvorrichtung (1), die einen nicht hermetischen Verschluß auf den das Produkt bereits enthaltenden Behältern (20) anbringt, um das Durchlassen von Flüssigkeit aus den Behältern (20) nach außen und umgekehrt zu gestatten;
- zumindest eine Vakuumkammer (4, 3b), die eine oder mehrere Stationen (3) zur Einstrahlung von Dampf in die Behälter, abwechselnd mit einer oder mehreren Stationen zum Abziehen des Dampfes aus den Behältern aufweist;
- eine Vorrichtung (2) zum Transport der Behälter (20) von der Vor-Falzmaschine oder der Verkronungsvorrichtung (1) zur Vakuumkammer (4, 3b);
- eine Vorheiz-Sterilisiervorrichtung (6) für die Behälter (20), die aus einem Förderer (6a) in einer atmosphärisch geschlossenen Druckkammer besteht, in die Dampf eingeleitet wird, der sich in der der Bewegungsrichtung der Behälter (20) entgegengesetzten Richtung bewegt.

9. Eine Anlage gemäß Anspruch 8, gekennzeichnet durch die Tatsache, daß sie eine erste Vakuumkammer oder -station (3b) mit starkem Unterdruck aufweist, die mit mit einer Zwischenkammer (3) verbunden ist, in der Dampf in die Behälter (20) eingeleitet wird, die wiederum mit einer weiteren Vakuumkammer- oder station (3b) verbunden sind.

10. Eine Anlage gemäß den Ansprüchen 8 oder 9, gekennzeichnet durch die Tatsache, daß sie zwischen der genannten Vorheiz-Sterilisiervorrichtung (6) und der Vakuumkammer (4, 3b) mit starkem Unterdruck einen kontrollierten Verbindungsbereich (14) aus unkondensierbaren Gasen aufweist, der gegen die Luft der Umgebung abgeschlossen ist.

11. Eine Anlage gemäß den Ansprüchen 8 oder 9, gekennzeichnet durch die Tatsache, daß der von der genannten Vor-Falzmaschine oder der genannten Verkronungsvorrichtung (1) angebrachte Verschluß eine provisorische Abdeckung ist, die aus einem Teil der Anlage selbst besteht und den Behälter (20) bis zu seiner hermetischen Verschließung mit dem definitiven Verschluß begleitet.

12. Eine Anlage gemäß den Ansprüchen 8 oder 9, gekennzeichnet durch die Tatsache, daß sie eine an dem Sternförderer (7) angebrachte Leitung (9) aufweist, die sich zwischen der genannten Vorheiz-Sterilisiervorrichtung (6) und der Vor-Falzmaschine oder der Verkronungsmaschine (10) befindet, die eine sterile Abdeckflüssigkeit in die noch nicht hermetisch geschlossenen Behälter (20) einleitet.

13. Eine Anlage gemäß Anspruch 8, gekennzeichnet durch die Tatsache, daß die genannte Vakuumkammer (4) mit starkem Unterdruck zwei oder mehr Stationen (3) zur Einstrahlung von Dampf in die genannten Behälter aufweist, abwechselnd mit zwei oder mehr Stationen (3b) zum Vakuum-Abziehen des Dampfes.

14. Ein Verfahren gemäß Anspruch 9, gekennzeichnet durch die Tatsache, daß es Vakuumpumpen (15a) und zumindest einen Dampfkondensator (21) umfaßt, die mit den Vakuumkammern oder -stationen (3b) und mit der Zwischenkammer oder -station (3) verbunden sind.

## Revendications

1. Une méthode pour la mise en boîte de produits alimentaires dans des récipients rigides (20) en métal, ou des récipients en plastique ou des récipients en verre, laquelle méthode prévoit la stérilisation par application de chaleur aux récipients (20) qui contiennent le produit, caractérisée en ce qu'elle comprend, avant la phase de stérilisation et de fermeture des récipients (20), les phases suivantes:
- la préfermeture des récipients (20) qui contiennent la nourriture, au moyen de l'application non hermétique d'un couvercle, à température et à pression atmosphériques;
- l'introduction desdits récipients (20) dans au moins une chambre sous haut vide (4, 3b) à température atmosphérique, dans laquelle chambre (4) on fait dans les récipients (20) une ou plusieurs injections presque instantanées de vapeur durant les moments où ils sont séparés de l'atmosphère sous vide, moments qui sont alternés avec ceux où ils passent sous le vide;
- le préchauffage du produit à une température contrôlée dans une chambre fermée à pression atmosphérique au moyen de la vapeur qui se déplace dans une direction opposée à la direction du flux d'avancement des récipients (20) vers la chambre sous vide (4).

2. Une méthode comme celle de la revendication 1, caractérisée en ce qu'elle comprend, entre la préfermeture des récipients et le préchauffage du produit, la phase intermédiaire suivante:
- l'introduction desdits récipients (20) dans une première chambre sous haut vide (3b) à température atmosphérique, lesquels passent ensuite à travers une chambre intermédiaire (3) dans laquelle une ou plusieurs injections de vapeur pratiquement instantanées sont faites dans les récipients (20) qui sont momentanément séparés du milieu sous vide, et leur passage dans une ultérieure chambre sous haut vide (3b).

3. Une méthode comme celle des revendications 1 ou 2, caractérisée par le fait que la phase de préfermeture du récipient (20) se fait en employant un couvercle provisoire, lequel couvercle fait partie de l'installation elle-même.

4. Une méthode comme celle de la revendication 1, caractérisée par le fait que le récipient (20) dans la chambre sous vide (4) subit deux injections instantanées de vapeur ou plus, alternées avec deux passages correspondants à travers des conditions de vide.

5. Une méthode pour la mise en boîte comme celle des revendications 1 ou 2, caractérisée par le fait que dans la chambre sous haut vide (4, 3b) le produit atteint une température comprise entre 30°C et 35°C.

6. Une méthode comme celle des revendications 1 ou 2, caractérisée par le fait que, durant la phase de préchauffage, le produit est porté à une température comprise entre 70°C et 80°C, avant de subir la stérilisation à une température comprise entre 90°C et 98°C environ.

7. Une méthode comme celle des revendications 1 ou 2, caractérisée par le fait que, durant la phase de préchauffage, le produit est porté à une température comprise entre 70°C et 80°C environ, avant de subir la stérilisation à une température comprise entre 130°C et 140°C environ.

8. Une installation pour la mise en boîte de produits alimentaires aqueux tels que des fruits en gros morceaux et des légumes, dans des récipients rigides en métal (20), ou des récipients en plastique ou des récipients en verre,
laquelle installation est équipée d'un groupe de stérilisation par la température relié au moyen d'un transporteur à étoile (7) à un dispositif pour agrafer les joints ou pour appliquer les couvercles à haute température (10) caractérisée par le fait qu'elle comprend, en combinaison:
- un appareil servant à préagrafer les joints ou à préappliquer les couvercles (1) qui appliquera un couvercle sur les récipients (20) qui contiennent déjà le produit, d'une façon non hermétique, pour permettre le passage du fluide à partir des récipients (20) vers l'extérieur et vice versa;
- au moins une chambre sous haut vide (4, 3b) qui comprend une ou plusieurs stations (3) d'injection de vapeur pour le récipient alternées avec une ou plusieurs stations sous vide pour l'élimination de la vapeur du récipient;
- un groupe de transfert pour les récipients (2) servant à transférer les récipients (20) à partir du dispositif pour préagrafer les joints ou pour préappliquer les couvercles (1) vers la chambre sous vide (4, 3b);
- un dispositif pour préchauffer et pour préstériliser (6) pour les récipients (20) qui est constitué par un transporteur (6a) dans une chambre fermée à pression atmosphérique dans laquelle est introduite la vapeur qui se déplace dans une direction opposée à la direction d'avancement des récipients (20).

9. Une installation comme celle de la revendication 8 caractérisée en ce qu'elle comprend:
- une première chambre sous haut vide (3b) reliée à une chambre ou à une station intermédiaire (3) pour l'injection de vapeur dans les récipients (20), lesquels récipients sont, à leur tour, reliés à une ultérieure chambre ou station (3b) sous haut vide.

10. Une installation comme celle des revendications 8 ou 9, caractérisée en ce qu'elle comprend un passage de liaison contrôlé (14) des gaz qui ne peuvent pas se condenser et de l'air qui vient du milieu fermé dudit groupe pour préstériliser et préchauffer (6) vers la chambre sous haut vide (4, 3b).

11. Une installation comme celle des revendications 8 ou 9, caractérisée par le fait que le couvercle qui est appliqué par lesdits dispositifs pour préagrafer les joints ou pour préappliquer les couvercles (1) consiste en un couvercle provisoire qui fait partie de l'installation et qui est destiné à accompagner le récipient relatif (20) jusqu'à sa fermeture hermétique avec un couvercle définitif.

12. Une installation comme celle des revendications 8 ou 9, caractérisée par le fait qu'elle comprend une conduite (9) positionnée en correspondance du groupe transporteur à étoile (7) qui est logé entre ledit groupe pour préstériliser et préchauffer (6) et le dispositif pour agrafer les joints ou pour appliquer les couvercles (10), laquelle conduite (9) introduira un liquide stérile, qui les couvrira, dans les récipients (20) qui ne sont pas encore fermés hermétiquement.

13. Une installation pour mettre en boîte comme celle de la revendication 8, caractérisée par le fait que ladite chambre sous haut vide (4) comprend deux stations d'injection de vapeur ou plus (3) pour lesdites boîtes alternées avec deux stations sous vide (3b) ou plus pour l'élimination de la vapeur.

14. Une installation comme celle de la revendication 9, caractérisée par le fait qu'elle comprend des pompes pour faire le vide (15a) et au moins un condensateur de vapeur (21), relié aux chambres ou aux stations sous vide (3b) et à la chambre ou à la station intermédiaire (3).
